(19) **Europäisches Patentamt**
**European Patent Office**
**Office européen des brevets**

(11) Veröffentlichungsnummer: **0 250 738 B1**

(12) **EUROPÄISCHE PATENTSCHRIFT**

(45) Veröffentlichungstag der Patentschrift: **06.03.91**

(51) Int. Cl.⁵: **B60T 13/68, B60T 17/18, B60T 13/26**

(21) Anmeldenummer: **87105541.4**

(22) Anmeldetag: **14.04.87**

(54) **Elektrische Druckmittel-Bremseinrichtung.**

(30) Priorität: **23.05.86 DE 3617356**

(43) Veröffentlichungstag der Anmeldung:
**07.01.88 Patentblatt 88/01**

(45) Bekanntmachung des Hinweises auf die
Patenterteilung:
**06.03.91 Patentblatt 91/10**

(84) Benannte Vertragsstaaten:
**DE FR GB IT SE**

(56) Entgegenhaltungen:
**EP-A- 0 110 119**
**EP-A- 0 163 774**
**DE-A- 3 212 930**
**FR-A- 2 566 729**

(73) Patentinhaber: **ROBERT BOSCH GMBH**
**Postfach 50**
**W-7000 Stuttgart 1(DE)**

(72) Erfinder: **Stumpe, Werner, Dipl.-Ing.**
**Goerdelerstrasse 10**
**W-7014 Kornwestheim(DE)**

## Beschreibung

### Stand der Technik

Die Erfindung bezieht sich auf eine elektrische Druckmittel-Bremseinrichtung nach der Gattung des Hauptanspruchs. Eine derartige Bremseinrichtung ist bekannt (EP-A-0110119).

Bei dieser bekannten Bremseinrichtung wird in dem Bremskreis nur der Druck gemessen, und zwar vom Betriebsbremsventil und am Bremszylinder, der Durchgang durch die Ventile bleibt weitgehend unkontrolliert. Wenn aber die Durchgängigkeit nicht auch immer wieder geprüft wird, kann es vorkommen, daß es in einem Notfall zu einem teilweisen Versagen der Bremse kommt. Dadurch können Unfälle entstehen.

### Vorteile der Erfindung

Die eingangs genannte Bremseinrichtung mit den kennzeichnenden Merkmalen des Hauptanspruchs hat demgegenüber den Vorteil, daß jeder Teilbremskreis, der Haupt- wie auch der Notbremskreis, ständig kontrolliert wird, so daß kein Totalausfall eintreten kann. Wenn nach dem Ansteuern der Ventile Druckänderungen am einen oder anderen Ventil ausbleiben, wird das von der Elektronik bemerkt.

### Zeichnung

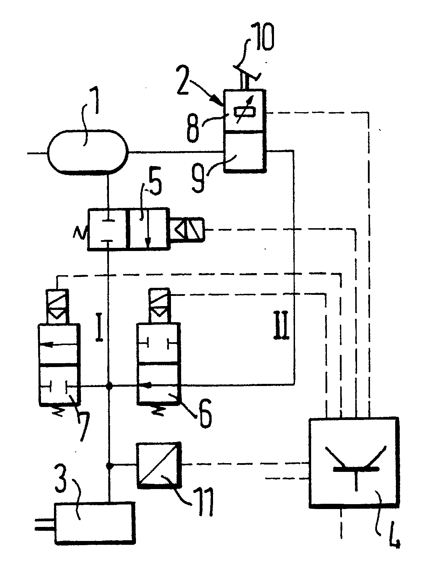

Ein Ausführungsbeispiel der Erfindung ist in der Zeichnung dargestellt und in der nachfolgenden Beschreibung näher erläutert.

### Beschreibung der Ausführungsbeispiele

Eine Druckmittel-Bremseinrichtung hat einen Vorratsbehälter als Druckmittelquelle 1 und einen Bremswertgeber 2 sowie einen Bremszylinder 3 und eine elektronische Schalteinrichtung 4, an die drei 2/2-Wege-Magnetventile 5, 6 und 7 angeschlossen sind. Ferner sind zwei Leitungskreise I und II vorgesehen, von denen der eine einen Hauptsteuerkreis I und der andere einen Nebensteuerkreis II darstellt.

Der Bremswertgeber 2 hat einen elektrischen Sollwertgeber 8 und ein Schaltventil 9, die untereinander angeordnet sind und durch ein gemeinsames Pedal 10 betätigt werden können.

Das 2/2-Wege-Magnetventil 5 liegt im Hauptsteuerkreis I zwischen der Druckmittelquelle 1 und dem Bremszylinder 3. Mit ihm kann der Vorratsdruck unmittelbar zum Bremszylinder 3 gelangen.

Das 2/2-Wege-Magnetventil 6 liegt im Nebensteuerkreis II, in dem der Vorratsdruck von der Druckmittelquelle 1 zunächst zum Schaltventil 9 des Bremswertgebers 2 und dann erst über das Magnetventil 6 zum Bremszylinder 2 gelangen kann. Das Magnetventil 7 dient lediglich als Entlastungsventil. In der von den 2/2-Wege-Magnetventilen 5 und 6 zu dem Bremszylinder 3 führenden Leitung ist ein Drucksensor 11 angeordnet.

### Wirkungsweise

Beim Betätigen des Bremspedals 10 wird auch der Sollwertgeber 8 wirksam, der die elektronische Schalteinrichtung 4 mit einer Druckanforderung entsprechend z.B. 5 bar ansteuert. Von dort aus erhält das Magnetventil 6 seinen Strom, so daß es in Schließstellung geht. Gleichzeitung erhält das Magnetventil 5 Strom, so daß es in seine andere Stellung schaltet. Von der Druckquelle 1 schießt ein Luftstrom unter einem Druck von 8 bar durch den Hauptsteuerkreis I zum Bremszylinder 3. Wenn dort ein Druck von beispielsweise 4 bar erreicht ist, gibt der Drucksensor 11 ein Signal an die Schalteinrichtung 4, und das Magnetventil 5 wird wieder zurückgeschaltet. Gleichzeitig mit dem Abschalten des Magnetventils 5 wird auch das Magnetventil 6 wieder zurückgeschaltet, so daß jetzt Druckmittel aus dem Nebensteuerkreis II zum Bremszylinder 3 gelangt. Auch diese Druckänderung aus dem Nebensteuerkreis II wird vom Drucksensor 11 erfaßt und an die elektronische Schalteinrichtung 4 gemeldet. Der über das Magnetventil 6 erfolgende Druckanstieg ist wegen der kleineren Druckdifferenz zwischen dem Druck vom Bremswertgeber 2 (ca. 5 bar) und dem Bremszylinder 3 (bereits eingesteuerte Druck von 4 bar) leichter zu beherrschen und genauer für die Angleichung an den Sollwert zu variieren.

Zum Bremslösen wird vom Bremswertgeber 2 her in aneloger weise über die Schalteinrichtung 4 das Magnetventil 7 angesteuert und umgestellt (ebenfalls zeitweise das Magnetventil 6). Druckanstieg und Druckabfall werden durch den Drucksensor 11 erfaßt, so daß ser einzige Drucksensor 11 in Verbindung mit den Ansteuersignalen der Magnetventile 5, 6, 7 die richtige Funktion aller drei Magnetventile 5, 6 und 7 überwacht.

## Ansprüche

Elektrische Druckmittel-Bremseinrichtung, mit drei den Bremszylindern (3) vorgeordneten und von einer mehrkreisigen Betriebsbremseinrichtung aus gesteuerten Elektromagnetventilen (5, 6, 7), die an die von der Betriebsbremseinrichtung angesteuerten Kreise (I, II) angeschlossen sind, und wobei der erste Elektromagnetventil (5) bei jeder Bremsung eine unmittelbare Druckmitteleinsteuerung von der Druckmittelquelle (1) in einen Hauptbremskreis (I) steuert, das zweite Elektromagnetventil (6) über einen Nebenbremskreis (II) mittelbar von der Druckmittelquelle (1) Druckmittel in die Bremszylinder (3) einsteuert, und des dritte Elektromagnetventil (7) zum Bremslösen dient, und wobei der Druck in dem Hauptbremskreis (I) und der in dem Nebenbremskreis (II) durch einen druckmittelempfindlichen Sensor (11) gemessen wird, der in der die Bremszylinder (3) mit den Elektromagnetventilen (5,6,7) verbindenden Leitung angeordnet ist, und wobei durch den Sensor (11) die Druckanstiegsänderungen und die Druckabfalländerungen ständig erfaßt und einer elektronischen Schalteinrichtung (4) zugeführt werden, dadurch gekennzeichnet, daß bei jedem Bremsen und jedem Bremslösen nach einem vorgegebenen Programm die Elektromagnetventile (5,6,7) in zwei Gruppen (5,6 bzw. 7,6) aktiviert werden, wobei jeweils der zweite Elektroventil (6) jeder Gruppe (5,6 bzw. 7,6) zur Überwachung seiner Funktion bei jedem Druckaufbau und Druckabbau mitgeschaltet wird.

## Claims

Electrical fluid-pressure brake system having three electromagnetic valves (5, 6, 7) arranged in front of the brake cylinders (3) and controlled from a multi-circuit service brake device, said electromagnetic valves being connected to the circuits (I, II) actuated by the service brake device, the first electromagnetic valve (5) bringing about a direct pressure medium injection from the pressure medium source (1) into a main brake circuit I whenever braking occurs, the second electromagnetic valve (6) injecting via a subsidiary brake circuit (II) pressure medium indirectly from the pressure medium source (1) into the brake cylinder (3), and the third electromagnetic valve (7) serving for releasing the brakes, and the pressure in the main brake circuit (I) and that in the subsidiary brake circuit (II) being measured by a pressure medium-sensitive sensor (11) which is arranged in the line connecting the brake cylinders (3) to the electromagnetic valves (5, 6, 7), and the pressure rise changes and the pressure drop changes being constantly detected by the sensor (11) and fed to an electronic switching device (4), characterized in that upon each braking and each release of the brakes the electromagnetic valves (5, 6, 7) are activated according to a predetermined scheme in two groups (5, 6 and 7, 6), the second electromagnetic valve (6) of each group (5, 6 and 7, 6) also being connected upon each pressure rise and pressure drop for the purpose of monitoring its operation.

## Revendications

Installation électrique de freinage à fluide sous pression, comportant trois électrovannes (5, 6, 7) en amont du maître-cylindre (3) et commandées à partir d'une installation de frein de route à plusieurs circuits, ces électrovannes étant reliées aux circuits (I, II) commandées par l'installation de frein de route, et à chaque freinage, la première électrovanne (5) commande une injection directe de fluide sous pression à partir de la source de fluide sous pression (1) dans un circuit principal de frein (I), la seconde électrovanne (6) commande par l'intermédiaire d'un circuit auxiliaire de frein (II), indirectement à partir de la source de fluide sous pression (1), du fluide sous pression dans le maître-cylindre (3) et la troisième électrovanne (7) sert à desserrer les freins et la pression dans le circuit principal de frein (I) et celle dans le circuit auxiliaire de frein (II) sont mesurées par un capteur (11) sensible à l'action d'un fluide sous pression, capteur qui est placé dans la conduite reliant le maître-cylindre de frein (3) aux électro-aimants (5, 6, 7) et le capteur (11) détecte en permanence les variations de pression dans le sens croissant et dans le sens décroissant et transmet les signaux à un circuit de commutation électronique (4), installation caractérisée en ce que pour chaque coup de frein et chaque ouverture des freins, les électrovannes (5, 6, 7) sont activées dans deux groupes (5, 6 ou 7, 6) selon un programme prédéterminé et chaque fois la seconde électrovanne (6) de chaque groupe (5, 6 ou 7, 6) est commutée en même temps pour surveiller son fonctionnement à chaque montée et à chaque chute de pression.